# FASCICULE DE BREVET EUROPEEN

(11) **EP 0 617 261 B1**
(45) Date de publication et mention de la délivrance du brevet: **07.01.1998**
(21) Numéro de dépôt: 94400488.6
(22) Date de dépôt: 08.03.1994
(51) Int. Cl.: G01F 11/32, B67D 3/02

(54) **Dispositif de dosage, notamment pour produits visqueux**
Dosiervorrichtung, insbesondere für viskose Produkte
Dosing device, particularly for viscose products

(30) Priorité: 23.03.1993 FR 9303296
(43) Date de publication de la demande: 28.09.1994
(73) Titulaire: ERCA, F-91942 Les Ulis (FR)
(72) Inventeur: Filippi, Marius, F-78160 Marly le Roi (FR)
(74) Mandataire: Dronne, Guy

(56) Documents cités:
- EP-A- 0 011 487
- DE-A- 2 253 727
- GB-A- 2 098 583
- GB-A- 2 099 790

## Description

La présente invention a pour objet un dispositif de dosage, notamment pour réaliser le dosage de produits visqueux.

Dans le domaine des produits alimentaires et notamment des produits à consistance visqueuse, tels que des mousses au chocolat, des crèmes chantilly et autres produits similaires, le dosage de la quantité de produit à introduire dans les pots de conditionnement est réalisé à l'aide d'une vanne se terminant par une buse, la vanne étant contrôlée pour que la quantité voulue de produit soit effectivement introduite dans le pot.

Dans le cas où le produit est visqueux, par exemple du type mentionné ci-dessus, et après la fermeture de la vanne, la séparation entre le pot ainsi rempli et la buse du dispositif de dosage ne se réalise pas de manière convenable en raison des difficultés d'écoulement du produit dans la buse du fait de sa viscosité qui peut être très élevée. On comprend en effet que, même après la fermeture de la buse de la vanne, le produit mettra un certain temps à s'écouler hors de la buse et tend à adhérer aux parois interne et externe de celle-ci.

Cette situation est bien sûr très défavorable, en particulier dans le cas d'installations automatiques de conditionnement de tels produits.

Un objet de la présente invention est de fournir un dispositif de dosage qui favorise la séparation entre la buse servant à délivrer le produit visqueux et la surface du produit remplissant le pot.

Pour atteindre ce but, le dispositif de dosage, notamment pour produit visqueux, se caractérise en ce qu'il comprend :
un corps définissant une chambre de dosage munie d'une ouverture à l'une de ses extrémités et d'une tubulure d'introduction dudit produit ;
une conduite montée mobile dans ladite chambre par rapport audit corps, une première extrémité de ladite conduite étant ouverte et constituant la sortie du produit dosé, ladite conduite traversant de façon étanche l'ouverture dudit corps, ladite conduite étant munie d'au moins un passage apte à faire communiquer ladite chambre avec l'intérieur de ladite conduite ;
des moyens fixes d'obturation dudit passage montés dans ladite chambre et solidaires dudit corps ; et
des moyens pour déplacer ladite conduite entre une première position d'ouverture dans laquelle ladite extrémité ouverte de la conduite fait saillie hors dudit corps d'une longueur 1 et dans laquelle ledit passage n'est pas obturé par les moyens d'obturation et une deuxième position de fermeture dans laquelle ladite extrémité ouverte fait saillie hors dudit corps d'une longueur sensiblement inférieure à 1 et dans laquelle ledit passage est totalement obturé par lesdits moyens d'obturation, lesdits moyens de déplacement coopérant avec la deuxième extrémité de ladite conduite.

On comprend que, grâce aux dispositions de l'invention, la conduite mobile qui constitue la partie mobile de la vanne en coopération avec les moyens obturateurs constituent en même temps une buse à position variable par rapport au récipient dans lequel le produit visqueux doit être déversé. Lorsque la vanne est ouverte, l'extrémité de la conduite fait largement saillie hors du corps du dispositif de dosage pénétrant ainsi suffisamment dans le récipient à remplir. En revanche, au fur et à mesure de la fermeture du clapet, cette conduite pénètre à l'intérieur du corps du dispositif de dosage en s'écartant ainsi du pot à remplir, ce qui favorise la séparation entre le produit contenu dans le pot et la buse de distribution de liquide visqueux.

Selon un mode préféré de réalisation de l'invention, les moyens d'obturation sont solidaires du corps et sont disposés pour obturer totalement le passage lorsque ladite conduite est dans sa deuxième position et pour dégager complètement le passage lorsque ladite conduite est dans sa première position.

De préférence encore, la conduite est cylindrique et sa deuxième extrémité est obturée. Cette conduite comprend plusieurs passages constitués par des lumières ménagées dans sa paroi et angulairement décalées et les moyens d'obturation comprennent un manchon cylindrique dans lequel ladite conduite peut coulisser de façon étanche, la longueur du manchon selon la direction de déplacement de ladite conduite étant au moins égale à la dimension desdites lumières selon ladite direction.

On comprend que, dans ce mode préféré de réalisation, la vanne a une structure particulièrement simple et que le manchon qui constitue la partie fixe du clapet sert en outre au guidage de la conduite dans ses mouvements de translation entre sa position d'ouverture et sa position de fermeture.

D'autres caractéristiques et avantages de la présente invention apparaîtront mieux à la lecture de la description qui suit de plusieurs modes de réalisation de l'invention donnés à titre d'exemples non limitatifs. La description se réfère aux figures annexées sur lesquelles :
- la figure 1 est une vue en coupe en section verticale du dispositif de dosage en position fermée ;
- la figure 2 est une vue semblable à celle de la figure 1 montrant le dispositif de dosage en position fermée ;
- la figure 3 est une section selon la ligne III-III de la figure 1 ; et
- la figure 4 est une vue en coupe verticale d'une partie de la conduite mobile du dispositif de dosage.

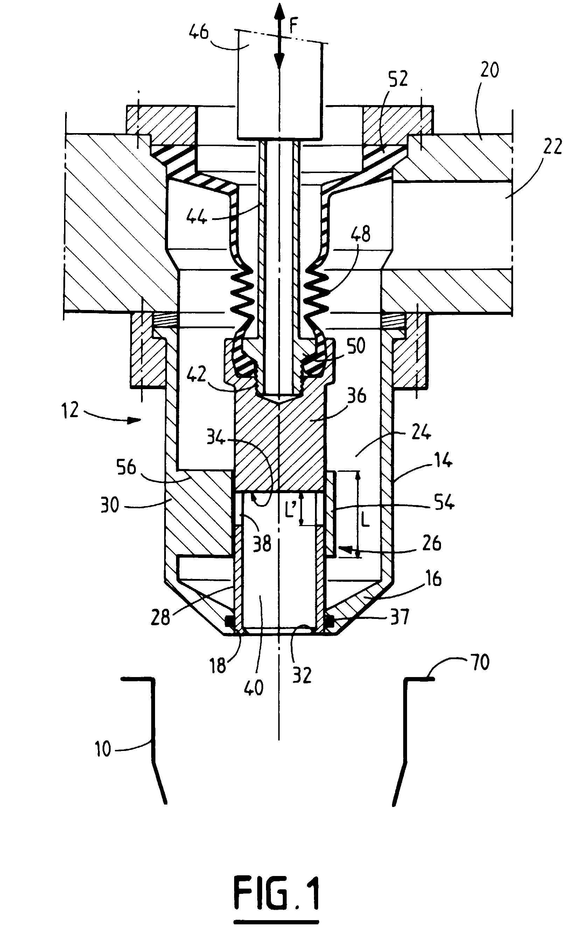

En se référant tout d'abord à la figure 1, on va décrire un mode préféré de réalisation du dispositif de dosage. Sur cette figure, on a représenté une partie d'un pot 10 destiné à être rempli à l'aide d'un produit visqueux, tel qu'une mousse au chocolat ou de la crème chantilly, et le dispositif de dosage 12. Le dispositif de dosage est essentiellement constitué par un corps cylindrique 14 qui se termine à sa partie inférieure par une portion tronconique 16 définissant une ouverture circulaire 18. Le corps 14 est fixé à la partie inférieure d'une embase, portant la référence générale 20, celle-ci comportant en particulier une conduite 22 d'amenée du produit à doser. La conduite 22 communique avec l'intérieur du corps cylindrique 14 qui constitue ainsi une chambre de dosage 24.

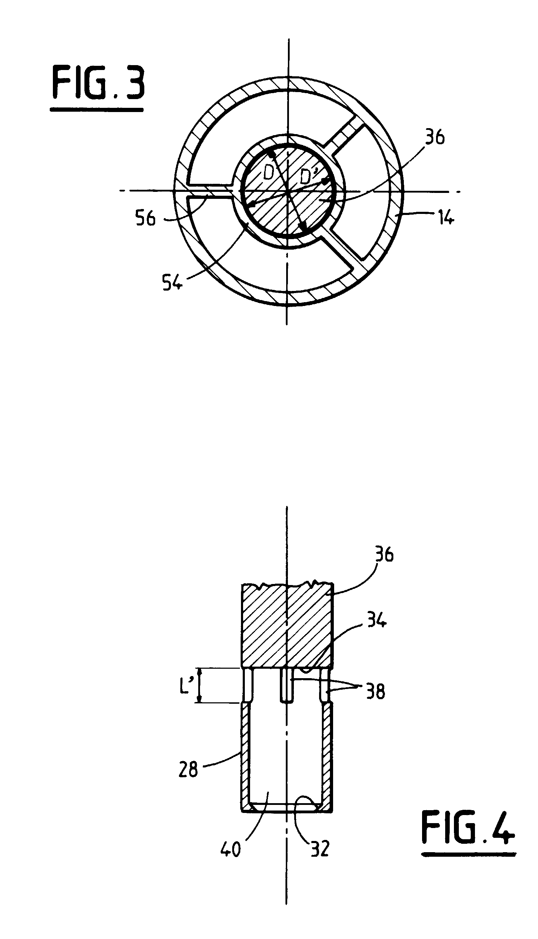

A l'intérieur de la chambre de dosage 24, on trouve un ensemble formant clapet ou vanne 26 qui est constitué essentiellement par une conduite mobile cylindrique 28 présentant le même axe de révolution XX' que le corps cylindrique 14 et par un organe d'obturation fixe 30. La conduite comporte une extrémité inférieure ouverte 32 et une deuxième extrémité 34 obturée par une pièce massive cylindrique 36. L'ouverture 18 du corps cylindrique est munie d'un joint annulaire d'étanchéité 37 qui assure l'étanchéité entre le corps 14 et la conduite 28 quelle que soit la position de cette dernière. Comme on le voit mieux sur la figure 4, la conduite 28 est munie à proximité immédiate de sa deuxième extrémité 34 d'ouvertures ou passages tels que 38, par exemple trois passages 38, qui sont angulairement régulièrement décalés et qui sont tous situés à un même niveau dans la paroi de la conduite 28. On comprend ainsi que les ouvertures ou lumières 38 permettent de faire communiquer l'intérieur de la conduite portant la référence 40 avec la chambre de dosage 24 lorsque la vanne 26 est ouverte. On comprend également que l'extrémité ouverte 32 de la conduite 28 constitue la buse de sortie du produit visqueux.

La figure 1 montre également que la partie massive 36 prolongeant la conduite 28 est solidaire d'une extrémité 42 d'une tige de commande 44, elle-même reliée à des moyens 46 de déplacement en translation de la conduite 28 selon la direction de l'axe XX'. Pour assurer l'étanchéité à l'intérieur de la chambre 24 et la protection de la tige de commande 42 ainsi que des organes de déplacement 46, un soufflet déformable 48 entoure la tige 44 et présente une première extrémité 50 qui est solidaire de la pièce massive 36 et une deuxième extrémité 52 qui est solidaire du bâti 20.

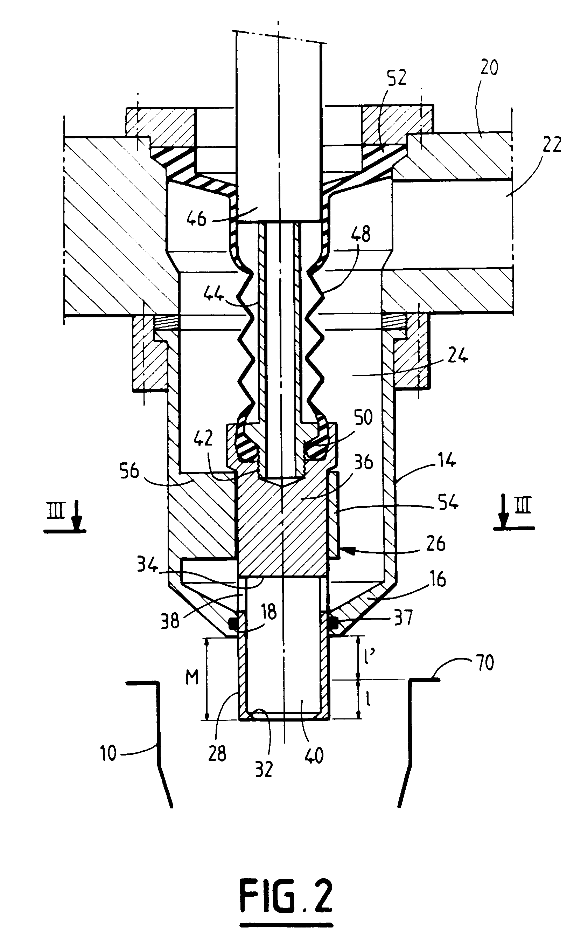

L'élément fixe d'obturation 30 est constitué, selon ce mode de réalisation, par un manchon cylindrique dont le diamètre interne D est très légèrement supérieur au diamètre externe D' de la conduite 28 de telle manière qu'au moins une semi-étanchéité soit réalisée entre la face interne du manchon 54 et la face externe de la conduite 28. Le manchon 54 est disposé selon l'axe XX' du corps cylindrique 14 et relié à celui-ci par des bras rayonnants tels que 56. La hauteur L du manchon 54, selon la direction de l'axe XX', est supérieure à la dimension L' des lumières 38 selon cette même direction. Comme le montre la figure 1 qui représente le clapet 26 en position fermée, lorsque les lumières 38 sont en regard du manchon 54, c'est-à-dire en position de fermeture, l'extrémité ouverte 32 de la conduite 28 se trouve sensiblement dans le plan de l'orifice 18 du corps cylindrique 14. En revanche, lorsque le clapet est dans sa position ouverte maximale, comme cela est représenté sur la figure 2, les lumières 38 sont dégagées par rapport au manchon 54 et l'extrémité ouverte 32 de la conduite fait saillie hors du corps cylindrique 14 d'une longueur M.

Comme le montre également la figure 2, l'ensemble du dispositif de dosage est positionné par rapport à la face supérieure 70 du pot 10 de telle manière que l'extrémité inférieure de la conduite 32 pénètre à l'intérieur du pot d'une longueur 1 de l'ordre de 10 mm, le dispositif étant lui-même disposé de telle manière que la partie inférieure du corps cylindrique 14 soit disposée à une distance 1' de l'ordre de 10 mm au-dessus de la face supérieure 70 du pot 10. On comprend qu'ainsi, selon un mode préféré de réalisation, la course totale de la conduite 28 est de l'ordre de 20 mm.

On voit que, lorsque le dispositif de dosage est dans sa position de repos représentée sur la figure 1, c'est-à-dire la position dans laquelle le clapet 26 est fermé, le produit visqueux est confiné dans la chambre de dosage 24 par la coopération entre le tube 28 et le manchon 54 qui obture les lumières 38 et par la coopération de l'extrémité 32 de la conduite 28 avec un joint d'étanchéité 37 disposé dans l'orifice inférieur 18 du corps cylindrique 14.

En revanche, lorsque le dispositif de dosage est en position de fonctionnement, comme cela est représenté sur la figure 2, la conduite 28 est en position basse de telle manière que les lumières 38 soient totalement dégagées par rapport au manchon 54. Ainsi, le produit visqueux contenu dans la chambre 24 peut passer par les lumières 38, pénétrer à l'intérieur de la conduite 28 et en sortir par l'extrémité 32 de celle-ci.

On comprend que, lorsqu'on commande la fermeture du clapet, c'est-à-dire le relèvement de la conduite 28, les lumières se ferment progressivement et l'extrémité 32 de la conduite 28 se relève simultanément. Ce mouvement de retrait de la conduite 28 qui est synchronisé avec la fermeture des lumières 38 favorise la séparation de la buse constituée par l'extrémité 32 de la conduite avec le produit contenu dans le pot 10.

Il va de soi que, bien que le mode de réalisation décrit précédemment constitue une forme d'exécution préférée de l'invention, on ne sortirait pas du cadre de l'invention en modifiant la construction du clapet à condition que sa fermeture soit toujours synchronisée avec le mouvement de retrait de la conduite 28. Par exemple, la communication entre l'intérieur de la conduite et la chambre de dosage pourrait être réalisée par la deuxième extrémité de la conduite qui serait alors ouverte. Cette deuxième extrémité viendrait en appui sur un siège axial fixe lorsque la conduite est en position de fermeture.

## Revendications

1. Dispositif de dosage notamment pour produit visqueux, caractérisé en ce qu'il comprend :
un corps (14) définissant une chambre de dosage (24) munie d'une ouverture (18) à l'une de ses extrémités et d'une conduite d'introduction dudit produit (22) ;
une conduite (28) montée mobile dans ladite chambre (24) par rapport audit corps (14), une première extrémité (32) de ladite conduite (28) étant ouverte et constituant la sortie du produit dosé, ladite conduite (28) traversant de façon étanche l'ouverture dudit corps (14), ladite conduite (28) étant munie d'au moins un passage (38) apte à faire communiquer ladite chambre (24) avec l'intérieur (40) de ladite conduite ;
des moyens fixes d'obturation (54) dudit passage montés dans ladite chambre (24) et solidaires dudit corps (14) ; et
des moyens (44, 46) pour déplacer ladite conduite (28) entre une position ouverte dans laquelle ladite extrémité ouverte de la conduite (28) fait saillie hors dudit corps d'une longueur M et dans laquelle ledit passage (38) n'est pas obturé par les moyens d'obturation et une deuxième position de fermeture dans laquelle ladite extrémité ouverte fait saillie hors dudit corps (14) d'une longueur sensiblement inférieure à M et dans laquelle ledit passage (38) est totalement obturé par lesdits moyens d'obturation (54), lesdits moyens de déplacement (44, 46) coopérant avec la deuxième extrémité (34) de ladite conduite (28).

2. Dispositif de dosage selon la revendication 1, caractérisé en ce que lesdits moyens fixes d'obturation (54) solidaires dudit corps (14) et sont disposés pour obturer totalement ledit passage (38) lorsque ladite conduite (28) est dans sa deuxième position et pour le dégager complètement lorsque ladite conduite est dans sa première position.

3. Dispositif de dosage selon la revendication 2, caractérisé en ce que ladite conduite (28) est cylindrique, en ce que sa deuxième extrémité (34) est obturée, en ce qu'elle comprend plusieurs passages constitués par des lumières (38) ménagées dans sa paroi et angulairement décalées et en ce que lesdits moyens d'obturation comprennent un manchon cylindrique (54) dans lequel ladite conduite peut coulisser de façon étanche, la longueur (L) dudit manchon selon la direction de déplacement de ladite conduite étant au moins égale à la dimension (L') desdites lumières selon ladite direction.

4. Dispositif de dosage selon la revendication 3, caractérisé en ce que lesdits moyens de déplacement comprennent une tige axiale de commande (44) dont une extrémité (42) est solidaire de l'extrémité obturée (34) deladite conduite (28) et en ce qu'il comprend en outre un soufflet d'étanchéité (48) entourant ladite tige, une première extrémité (50) dudit soufflet étant solidaire de l'extrémité obturée (34) de ladite conduite et dont l'autre extrémité (52) est rendue solidaire dudit corps (14).

5. Dispositif de dosage selon l'une quelconque des revendications 1 à 4, caractérisé en ce que ladite ouverture (18) du corps (14) est munie d'un joint d'étanchéité (37) coopérant avec la face externe de ladite conduite.

## Patentansprüche

1. Vorrichtung zur Dosierung, insbesondere von viskosen Produkten, dadurch gekennzeichnet, daß sie enthält:
ein Gehäuse (14), das eine Dosierungskammer (24) bildet, die an einem ihrer Enden mit einer Öffnung (18) versehen ist sowie mit einem Leitungsstück zur Einführung des oben genannten Produktes (22);
ein in bezug zum besagten Gehäuse (14) beweglich in der oben genannten Dosierungskammer (24) eingebauten Leitungsstück (28), ein erstes Ende (32) des besagten Leitungsstücks (28), das offen ist und den Ausgang für das dosierte Produkt darstellt, wobei das besagte Leitungsstück (28) durch die Öffnung des genannten Gehäuses (14) geht und das Leitungsstück (28) mit mindestens einem Durchgang (38) versehen ist, der dazu geeignet ist, die besagte Kammer (24) mit dem Inneren (40) des besagten Leitungsstücks zu verbinden;
feste Verschlußvorrichtungen (54) für den oben genannten Durchgang, die in der besagten Kammer (24) eingebaut und mit dem oben genannten Gehäuse (14) verbunden sind; sowie
Vorrichtungen (44, 46), um das besagte Leitungsstück (28) zu verschieben, und zwar zwischen einer geöffneten Position, in der das besagte offene Ende des Leitungsstücks (28) über eine Länge M aus dem oben genannten Gehäuse herausragt und in der der besagte Durchgang (38) durch die Verschlußvorrichtungen nicht verschlossen ist, sowie einer zweiten geschlossenen Position, in der das besagte offene Ende über eine Länge aus dem oben genannten Gehäuse herausragt, die deutlich geringer als die Länge M ist und in der der besagte Durchgang (38) durch die besagten Verschlußvorrichtungen (54) vollständig verschlossen ist, wobei die besagten Verschiebevorrichtungen (44, 46) mit dem zweiten Ende (34) des besagten Leitungsstücks (28) zusammenwirken.

2. Dosiervorrichtung entsprechend dem Anspruch 1, dadurch gekennzeichnet, daß die besagten festen Verschlußvorrichtungen (54) mit dem oben genannten Gehäuse (14) verbunden und so angeordnet sind, daß sie den besagten Durchgang (38) vollständig verschließen, wenn sich das besagte Leitungsstück (28) in seiner zweiten Position befindet, und ihn vollständig freigeben, wenn sich das besagte Leitungsstück in seiner ersten Position befindet.

3. Dosiervorrichtung entsprechend dem Anspruch 2, dadurch gekennzeichnet, daß das besagte Leitungsstück (28) zylindrisch ist, daß sein zweites Ende (34) verschlossen ist, daß es mehrere Durchgänge besitzt, die aus Öffnungen (38) bestehen, die an seiner Wand angebracht und winklig versetzt sind, und daß die besagten Verschlußvorrichtungen eine zylindrische Muffe (54) enthalten, in der das Leitungsstück auf dichte Art und Weise gleiten kann, wobei die Länge (L) der oben genannten Muffe in der Richtung der Verschiebung des besagten Leitungsstücks mindestens gleich dem Maß (L') der besagten Öffnungen in der genannten Verschieberichtung ist.

4. Dosiervorrichtung entsprechend dem Anspruch 3, dadurch gekennzeichnet, daß die besagten Verschiebevorrichtungen eine axiale Steuerstange (44) enthalten, von der ein Ende (42) mit dem verschlossenen Ende (34) des besagten Leitungsstücks (28) verbunden ist, und daß sie darüber hinaus einen Dichtbalg (48) enthält, der die besagte Stange umgibt, wobei ein erstes Ende (50) des oben genannten Dichtbalgs mit dem verschlossenen Ende (34) des besagten Leitungsstücks verbunden ist und dessen anderes Ende (52) mit dem besagten Gehäuse (14) verbunden ist.

5. Dosiervorrichtung entsprechend einem beliebigen der Ansprüche 1 bis 4, dadurch gekennzeichnet, daß die besagte Öffnung (18) des Gehäuses (14) mit einem Dichtring (37) ausgestattet ist, der mit der Außenfläche des besagten Leitungsstücks zusammenwirkt.

## Claims

1. Dispensing device, particularly for a viscous product, characterised in that it comprises:
a body (14) defining a dispensing chamber (24) provided with an opening (18) at one of its ends and a conduit for introducing said product (22);
a conduit (28) mounted so as to be moveable within said chamber (24) with respect to said body (14), a first end (32) of said conduit (28) being open and constituting the outlet for the dispensed product, said conduit (28) passing in an impervious manner through the opening of said body (14), said conduit (28) being provided with at least one passage (38) capable of causing said chamber (24) to communicate with the inside (40) of said conduit;
fixed means (54) for obturating said passage, mounted in said chamber (24) and integral with said body (14); and
means (44, 46) for displacing said conduit (28) between an open position in which said open end of the conduit (28) projects outside said body by a length M and in which said passage (38) is not obturated by the obturation means and a second, closed position in which said open end projects outside said body (14) by a length substantially less than M and in which said passage (38) is totally obturated by said obturation means (54), said displacement means (44,46) co-operating with the second end (34) of said conduit (28).

2. Dispensing device according to Claim 1, characterised in that said fixed obturation means (54) integral with said body (14) and are arranged so as to obturate totally said passage (38) when said conduit (28) is in its second position and so as to unblock it completely when said conduit is in its first position.

3. Dispensing device according to Claim 2, characterised in that said conduit (28) is cylindrical, in that its second end (34) is obturated, in that it comprises several passages constituted by slots (38) made in its wall and offset angularly and in that said obturation means comprise a cylindrical sleeve (54) in which said conduit can slide in an impervious manner, the length (L) of said sleeve in the direction of displacement of said conduit being at least equal to the dimension (L') of said slots in said direction.

4. Dispensing device according to Claim 3, characterised in that said displacement means comprise an axial control rod (44), one end of which (42) is integral with the obturated end (34) of said conduit (28) and in that it further comprises a sealing bellows (48) surrounding said rod, a first end (50) of said bellows being integral with the obturated end (34) of said conduit and the other end (52) of which is made integral with said body (14).

5. Dispensing device according to any one of Claims 1 to 4, characterised in that said opening (18) of the body (14) is provided with a gasket (37) co-operating with the outer face of said conduit.
